# EUROPEAN PATENT SPECIFICATION

(11) **EP 2 818 237 B1**
(45) Date of publication and mention of the grant of the patent: **25.12.2019**
(21) Application number: 14174812.9
(22) Date of filing: 27.06.2014
(51) Int. Cl.: C09D 11/02, C09D 11/03, C09D 11/326, D21C 5/02, D21H 19/46, B01F 17/00, C09D 11/38

(54) **Surface active agent and preparation thereof**
Oberflächenaktiver Wirkstoff und Herstellung davon
Agent actif de surface et sa préparation

(30) Priority: 28.06.2013 BE 201300458
(43) Date of publication of application: 31.12.2014
(73) Proprietor: Chemstream BVBA, 2650 Edegem (BE)
(72) Inventor: Deroover, Geert Gaston Paul, 2500 Lier (BE)
(74) Representative: D'Halleweyn, Nele Veerle Trees Gertrudis

(56) References cited:
- WO-A2-2006/014626
- US-B1- 7 888 428
- Eckert: "Designing Smart Surfactants", , 27 January 2012 (2012-01-27), pages 1-8, XP055104689, Retrieved from the Internet: URL:http://eckert.chbe.gatech.edu/pdf/surf actant.pdf [retrieved on 2014-02-27]
- HELLBERG P-E ET AL: "CLEAVABLE SUFACTANTS", JOURNAL OF SURFACTANTS AND DETERGENTS, SPRINGER, BERLIN, DE, vol. 3, no. 1, 1 January 2000 (2000-01-01) , pages 81-91, XP000875299, ISSN: 1097-3958, DOI: 10.1007/S11743-000-0118-Z
- CALUM J. DRUMMOND ET AL: "Cis-trans photoisomerization of a surfactant O-protonated stilbazolium betaine in micellar systems", LANGMUIR, vol. 6, no. 1, 1 January 1990 (1990-01-01) , pages 285-288, XP055104692, ISSN: 0743-7463, DOI: 10.1021/la00091a046
- TEHRANI-BAGHA ET AL: "Cleavable surfactants", CURRENT OPINION IN COLLOID AND INTERFACE SCIENCE, LONDON, GB, vol. 12, no. 2, 26 July 2007 (2007-07-26), pages 81-91, XP022150145, ISSN: 1359-0294, DOI: 10.1016/J.COCIS.2007.05.006
- SHUKLA D ET AL: "Development of Cleavable Surfactants", TENSIDE, SURFACTANTS, DETERGENTS, CARL HANSER VERLAG, MUNCHEN, DE, vol. 47, no. 1, 1 January 2010 (2010-01-01), pages 7-12, XP001550566, ISSN: 0932-3414

## Description

### Field of the invention

The present invention relates to a surface active agent, and to the preparation of a surface active agent. The invention also relates a composition comprising the surface active agent, and the use thereof.

### Background of the invention

Surface active agents primarily ensure reduction of the interfacial tension between different phases. The phases are for instance two different liquids, wherein typically one liquid is in the form of non-polar droplets that may be homogeneously mixed with a polar liquid by means of the surface active agent, in this case an emulsifier. The different phases may alternatively be a liquid and a solid, wherein a surface active agent - more precisely a dispersing agent - ensures homogenously mixing of the two phases. Further combinations of phases are possible, wherein the surface active agent ensures a homogeneous distribution of for instance a solid in a gas, a gas in a liquid or a liquid in gas (known as a foaming agent), or a liquid in a liquid (known as an emulsifier). The surface active agents provide compatibility of the different phases by stabilizing the interphase, or an area between the different phases, by reducing the interfacial tension between the phases, such that a homogeneous stable mixture of the different phase is obtained.

Known surface active agents have an anchoring part that is covalently bound to a stabilizing part. The anchoring part interacts with a first phase, for instance with the non-polar emulsion droplet or a solid part. The stabilizing part ensures that the phase with which the anchoring part interacts, is stable in the other phase. The type of stabilizing part used depends on the polarity of the phase with which the stabilizing part gets in contact. One specific type of surface active agents is a surfactant, wherein both the anchoring part and the stabilizing part are limited to a single group. Typical examples of surfactants have a head-group and a tail-group of different polarity, such as the soap molecule dodecylsulfate.

Known surface active agents ensure a good stabilization between different phases, wherein the phases are mixed homogeneously. It is however desired for certain applications that the homogeneous mixture is undone, or collapses into the different phases and that the interfacial tension between the phases therewith increases, or that the surface active agent makes that the stability between the phases disappears or tends to disappear. In this way, phases to be distinguished may be formed. For instance, it may be necessary that pigment particles are dispersed homogeneously in oil and form a pigment dispersion that can be treated easily. However, when printing the pigment particles onto the substrate, it is often desirable that the pigment particles can agglomerate.

Thereto, investigations have been made in the past decades to cleavable surfactants that may be cleavable under various conditions, such as acid, base, heat and irradiation. Cleavable surfactants are for instance envisaged, so as to improve the biodegradation characteristics. An overview of these cleavable surfactants is provided in P.E. Hellberg et al, 'Cleavable surfactants', Journal of Surfactants and Detergents vol3 (2000), 81-91. Hellberg et al do not mention any other surface active agents than surfactants.

A particularly important class of cleavable surface active agents is the one of UV-labile surface active agents. This class is relevant, as it allows an active control of the surface active agent properties and that can be steered (i.e. controlled) by a stimulus without change of the chemical composition of which the surface active agent forms part. Moreover, as stated by Hellberg, the UV-labile surfactants are attractive because it allows an extremely fast breakdown of the surfactant to occur. Hellberg mentions two different examples; the first one being an alkyl aryl ketone sulfonate that structurally resembles ABS surfactants. This compound is photocleaved into a watersoluble aryl sulfonate and a mixture of two methyl branched olefins. The photocleavage occurs by a so-called Norrish Type II cleavage, at a wavelength of 300 nm or more. This first example is taken from a 1982 article (W.W. Epstein et al, Analytical Biochemistry 119(1982), 304-312. The article discloses the synthesis of the cleavable surfactant in Scheme II and thereafter. It is a synthesis with at least 8 steps. The overall yield (calculated as the product of the yield fro m the individual steps) is in the order of 10%. Moreover, even though Hellberg et al refer to the advantage of an extremely fast breakdown, the irradiation with UV-light is carried out at 1.5 cm distance overnight - which is undesirably slow instead of fast.

The second example is the provision of a diazo-group between a polar head group particularly a sodium sulphonate group - and the tail (4-alkyl-phenyl) of an anionic surfactant. This surfactant is a known as a aryldiazosulphonate. However, this group has the disadvantage that it requires a two step reaction. In the initial, photo-initiated step, the diazonium-bond is broken. However, this does not yet result in division of the surfactant. This division occurs only in a second step, wherein a reaction occurs with certain solvents, and particularly with water. This two-step reaction requires time, and is limited to use in aqueous environments. Furthermore, the shown compound is a simple anionic surfactant with the sulphonate group coupled to the diazonium-group. It is not evident that such group could be applied in more elaborate dispersing agents. Moreover, a review of the literature published after publication of the 2000 Hellberg et al review article, was published as Tehrani-Bagha & Holmberg, Current Opinion in colloid & interface science 12(2007), 81-91. Herein, no further work is mentioned in relation to the UV-labile surfactants, and not even in relation to the diazonium-based surfactants, although the diazonium-group is well known. It should therefore be concluded that also the examples of diazonium-groups mentioned in Hellberg et al have major disadvantages.

Shukla *et al.* disclosed the synthesis of ketal-based surfactants for use in microemulsions, wherein the synthesis started by reacting glycerol with a hydrophobic ketone, 3-hexadecanonen, and subsequently reacting the remaining hydroxyl group of the glycerol, after activation with NaH, with mesylate of a monomethyl-PEG.

WO 2006/014626 A2 discloses a particulate construct stabilized by amphiphilic copolymers and comprising at least one active coupled to a hydrophobic moiety sustained release of the active in both *in vitro* an *in vivo* environments.

US 7,888,428 B1 discloses a surfactant initiator which includes a first hydrophilic chemical group bonded to a first hydrophobic chemical group to form a first portion. A second portion is also included, made up of a second hydrophobic chemical group. Furthermore, US 7,888,428 B1 discloses a homolytic cleavable group which chemically bonds the first and second portions. At least one of the first and second portions is configured to initiate free-radical polymerization upon separation of the hemolytic cleavable group. The disclosed surfactant initiator can be used to produce latex particulates and associated suspensions and inks.

### Summary of the invention

It is therefore an object of the present invention to provide a cleavable surface active agent that on the one hand may cancel out interfacial tension between phases in order to form a homogeneous mixture of stabilized phases, and that on the other hand may make the interfacial tension between the phases revert, so that the phases are destabilized and the two phases collapse.
It is a further object that the destabilization of the two phases may occur in a controlled manner.
It is another object that the destabilization of the two phases may occur irreversibly.

It is again another object that the destabilization of the two phases may occur fast, and particularly within a duration of minutes or even seconds, so that an effective collapse may be exploited in common applications.
These objects, as well as other objects, may be achieved with a surface active agent according to claim 1.
According to an aspect of the invention, a cleavable surface active agent is provided that has a stabilizing effect on different phases and comprises an anchoring part, a stabilizing part and a stimulus responsive part, wherein the stimulus responsive part comprises a benzoyl group with a polar group on an α-position to the keton, and wherein, upon stimulation of the surface active agent by exposure to UV-radiation, the stabilizing effect of the surface active agent decreases.

The inventors have discovered, surprisingly, that the use of benzoyl groups with a polar group on the α-position to the keton will significantly increase the speed of the cleavage, and therewith the efficiency. It is herein observed that the cleavable surface active agents do not cleave in accordance with the Norrish type II cleaving reaction. For such Norrish type II cleaving, an alkyl group is needed adjacent to the keton, so that a hydrogen may be taken from the carbon atom at the γ-position to the keton group. Such γ-carbon atom is preferably not present or not accessible (f.i. due to steric reasons) in the compounds of the invention. Moreover, it was found that the synthesis of this type of cleavable surface active agents is less difficult. One of the synthetic problems is that the anchoring part and the stabilizing part are typically substituents of a different nature, so as to enable the use of the compound as a surface active agent. These synthetic problems are reduced, since the different substituents may be coupled to different locations: as a substituent to the phenyl ring of the benzyl keton, as a substituent to the α-position to the keton, or alternatively, as a substituent to a phenyl-ring coupled to the α-position, for instance on the β- or on the γ-position. Moreover, the Norrish type I is deemed to have a higher quantum efficiency and to occur faster.

Herewith, the stimulus responsive part is a decomposable part, which collapses or splits after stimulation, such that the anchoring part and the stabilizing part are no longer connected. Preferably, the decomposition is irreversible, such that the anchoring part and the stabilizing part do not react again with each other. Preferably, the phases remain destabilized after stimulation or retain their reduced stabilization. The decomposition may take place in that a covalent bond in the decomposable part is broken after stimulation.
The decomposable part comprises a photo-decomposable part, wherein the stabilizing part and the anchoring part split up after stimulation, particularly by exposure to UV-light. The photo-decomposable part is more specifically decomposable according to a so called Norrish type I photocleavage, wherein the bond is broken between the carbonyl-group (i.e. of the keton) and the atom in the α-position (known as α-cleavage).

Suitably, the polar group comprises at least one heteroatom, which particularly present at the said α-position, or is bound to the atom in the α-position. Examples of suitable heteroatoms are oxygen, nitrogen, sulfur and phosphorous.
In a first embodiment, the polar group comprises a carbon atom in the α-position that is substituted with a heteroatom, particularly an oxygen or nitrogen. The bond with the heteroatom is preferably a single bond. The combination of the benzoyl group and this group is also known as a (heteroatom-substituted) acetophenon. Its generic structural formula is shown below as formula (XXa). More specifically, the group located on the α-position to the keton is chosen from ketal, hydroxymethyl, alkoxymethyl, aminomethyl, methyl ester (RCOOCH2-), optionally substituted at the methyl, for instance with phenyl. The resulting combinations are also known as dialkoxyacetophenones (ketals), hydroxyacetophenones (hydroxymethyl), alkylaminoacetophenones (aminomethyl), benzoyl formate esters (methyl ester), and further benzoin ethers. The polar groups with heteroatoms have been found to possess a sufficient polarity. Moreover, the heteroatom offers a good site for binding of a substituent being part of or constituting either the anchoring or the stabilizing part.
In a second embodiment, the polar group comprises a phosphorous atom in the α-position, and is more preferably a phosphinyl-group. The decomposable part then comprises for instance a benzoylphosphinoxide derivative, a benzoylphosphinate derivative or a bisacylphosphine oxide. Its generic structural formula is shown below as formula (XXb)

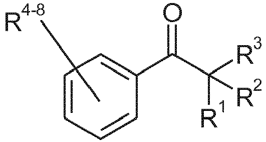

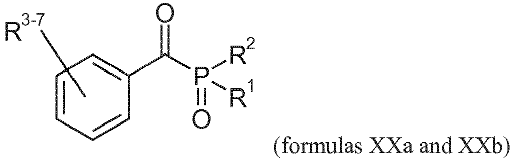

In one suitable embodiment, a further phenyl ring is present on the β- or on the γ-position. Such a structure is deemed positive so as to sandwich the UV-sensitive group between two phenyl-rings. Moreover, upon irradiation two radicals with similar stability will be formed. This reduces the risk that the two radicals would recombine again, which would prevent the decomposition.

Preferably, the surface active agent comprises one or more stimulus responsive parts. The surface active agent may for instance contain 1,2, 3, 4, 5, 6 or more stimulus responsive parts. In other words, the surface active agent according to the invention is preferably a network-type agent, i.e. an agent different from a surfactant and having a plurality of stabilizing parts and at least one anchoring part with more preferably a plurality of anchoring sites (i.e. locations for bonding and/or adhesion the phase to be stabilized). Such a network-type agent may be of a supramolecular nature.

More preferably, the surface active agent is designed so that a plurality of substituent groups is coupled to an anchoring part, wherein at least some of the substituent groups comprise a stimulus responsive part and a stabilizing part. While it may be the case that all substituent groups comprise a stimulus responsive part, this is not deemed necessary. The stimulus responsive part is herein arranged so as to split off such stabilizing part. Such surface active agents are particularly suitable as dispersing agents that are able to bind to a particle with the anchoring group.

In again a further embodiment, the surface active agent comprises a photodecomposable part and is selected from the group consisting of
- a benzoin derivative according to the structural formula (I), wherein R1, R2, R3 and/or R4 are part of the anchoring part or the stabilizing part, or comprises the anchoring part or the stabilizing part, and X respectively comprises the stabilizing part or the anchoring part, and which upon stimulation is split into a derivative with the formula (II) and (III); 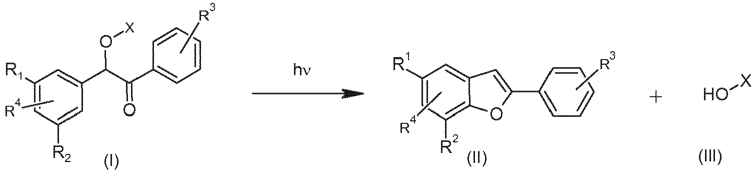
- a benzoin derivative according to the structural formula (IV), wherein R1, R2. R3 and/or R4 constitute part of the anchoring part or the stabilizing part or comprise the anchoring part or the stabilizing part, and X respectively comprises the stabilizing part or the anchoring part, and which is split into derivatives with the structure of formula (V) and (VI) upon stimulation; 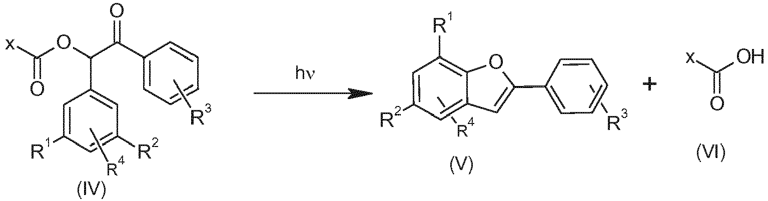
- a hydroxyacetophenone (HAP) derivative comprising the anchoring part and the stabilizing part, and which is split upon stimulation into a phenyl acetone derivative and the anchoring part or the stabilizing part, and wherein the phenyl acetone derivative respectively comprises the stabilizing part or the anchoring part or constitutes part of the stabilizing or anchoring part;
- a (di)alkoxy acetophenone derivative according to the structural formula (VII), wherein X constitutes part of the anchoring part or the stabilizing part or comprises the anchoring part or the stabilizing part, and R1, R2 and/or R3 comprises respectively the stabilizing or the anchoring part, and which is split upon stimulation into derivatives with the structure of formulas (VIII) and (IX); 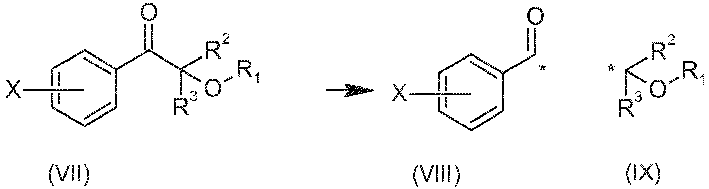
- an (alkyl)aminoacetophenone (AAAP) derivative comprising the anchoring part and the stabilizing part, and which is split, upon stimulation, into a phenyl acetone derivative and an amino derivative comprising or forming part of the anchoring part or the stabilizing part, and wherein the phenyl acetone derivative respectively comprises the stabilizing part or the anchoring part, or forms part of the stabilizing or anchoring part;
- a derivative according to the structural formula (XI), wherein X constitutes part of the anchoring or the stabilizing part or comprises the anchoring part or the stabilizing part, and R1, R2, R3 and/or R4 respectively comprise the stabilizing part or the anchoring part, and which splits, upon stimulation, into derivatives with the structure of formulas (XII) and (XIII) or into derivatives with the structure of formulas (XIV) and (XV); 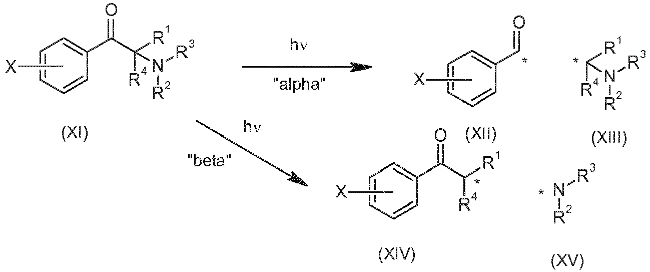
- a benzyl ketal derivative according to the structural formula (XVI), wherein R1, R2, and/or R3 comprise the stabilizing part or the anchoring part and X respectively constitutes part of the anchoring or the stabilizing part or comprises the anchoring part or the stabilizing part, and which is split, upon stimulation, into derivatives with the structure of formulas (XVII) and (XVIII) and; 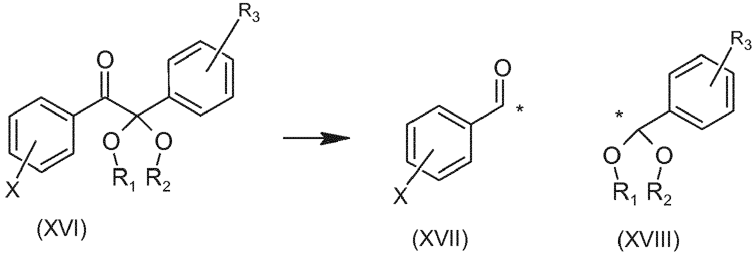
- a benzoylphosphinoxide derivative comprising the anchoring part and the stabilizing part and/or wherein the benzoylphosphinoxide group constitutes part of the anchoring or the stabilizing part;
- a benzoylphosphinate derivative comprising the anchoring part and the stabilizing part and/or wherein the benzoylphosphinate group constitutes part of the anchoring or stabilizing part;
- a BAPO (bisacylphosphine oxide or bisbenzoylphosphine oxide) comprising the anchoring part and the stabilizing part and/or wherein the BAPO group constitutes part of the anchoring or stabilizing part;
It is understood, in the context of the preceding embodiments, that the term "respectively" refers to the following: that if X comprises or forms part of the anchoring part, R1, R2, R3, R4 and/or R5 form part or comprise the stabilizing part; and that if X comprises or forms part of the stabilizing part, R1, R2, R3, R4 and/or R5 form part or comprise the anchoring part.

More specifically, the surface active agent comprises a photodecomposable group, the photodecomposable group being selected from the group consisting of:
- 2-phenyl-2-hydroxy-1-phenylethanone moiety;
- 2-oxo-1,2-diphenylethyl formate moiety;
- hydroxyacetophenone derivative;
- alkylaminoacetophenone derivative;
- benzyl ketal derivative comprising the compound with structural formula (XVI); 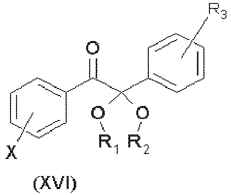
- a benzoylphosphinoxide, for instance a TPO derivative (i.e. a derivative of (diphenylphosphoryl)(2,4,6-trimethylphenyl)methanone);
- a benzoylphosphinate derivative, for instance a TPO-L derivative (i.e. a derivative of phenyl-(2,4,6-trimethyl-benzoyl)-phosphinic acid ethyl ester);
- a BAPO (i.e. bisacyl- or bisbenzoylphosphine oxide), for instance a derivative of [phenyl-(2,4,6-trimethyl-benzoyl)-phosphinoyl]-(2,4,6-trimethyl-phenyl)-methanon).

According to the second aspect, the invention relates to a process for the preparation of a surface active agent comprising the step of reacting a stimulus responsive part with the anchoring part and/or the stabilizing part.
The synthetic conditions will vary in dependence of the different parts being joined. The process for the preparation of the surface active agent preferably makes use of standard synthetic methods known to the skilled person. It is herein beneficial that the anchoring part and/or the stabilizing part, which typically constitute different types of groups and may have a significant size can be easily coupled into the surface active agent. This is achieved, since the surface active agents with stimulus responsive parts identified in the structural formulas shown hereinabove, have suitable linkage locations; i.e. the molecules are provided with sites to which the relevant parts may be synthetically coupled in a comparatively easy manner. One suitable linkage location is a substitution to a phenyl / aryl ring. An alternative linkage location is via the heteroatom at the α-position to the carbonyl-ring, for instance as an alkoxy-group or an alkylamino-group.
In one suitable embodiment, use is made of a biocatalysed synthesis for the generation of the cleavable bond between the carbonyl-group and the atom on the α-position. The use of biocatalysts for this reaction turns out beneficial.

According to a further aspect, the invention relates to a surface active agent comprising an anchoring part, a stabilizing part and a stimulus responsive part, wherein, upon stimulation of the surface active agent by exposure to UV-radiation, the stabilizing effect of the surface active agent decreases, and wherein the surface active agent is designed so that a plurality of substituent groups is coupled to an anchoring part, each one comprising a stimulus responsive part and a stabilizing part.
According to this aspect, a surface active agent in the form of a network is provided, which is based on a central anchoring group with a plurality of substituents comprising a stimulus responsive part and a stabilizing part. The stimulus responsive part may be coupled directly to the anchoring group, or may be arranged on top of an intermediate chain, for instance as a substituent to an alkyl, alkylene or alkoxy-chain. Such a network surface active agent is deemed excellent for use as a dispersing agent to (solid) particles, particularly particles with a diameter of 10-5000 nm.

The stimulus responsive part may herein comprise for instance a substituted acetophenone with a polar group at the α-position to the carbonyl group. Suitable polar groups are for instance those comprising a heteroatom, as defined and discussed hereinabove in more detail. Alternatively, use can be made of a diazo-group for the stimulus response. Even though this group is less preferred due to its thermal sensitivity, it may be useful in various applications. More particularly, use is made of alkyl-diazo compounds, which are preferred over aryldiazo-compounds.

Rather than that the surface active agent forms a single molecule, the surface active agent may be a supramolecular structure, wherein the coupling between the stimulus responsive part and at least one of the stabilizing part and the anchoring part is based on hydrogen bonding. Suitably, such hydrogen bonding is achieved by means of a pair of an amidine and an acid anion, such as a sulphonate, phosphonate, but particularly a carboxylate anion.

In the context of this embodiment, the number of substituents to the anchoring group is suitably in the range of 2 to 10. However, anchoring parts with higher molecular weight are not excluded. In one specific implementation, the number of substituents may be in the range of 40-200, for instance 100. It is observed that not all substituents need to contain a stimulus responsive part.

In one exemplary implementation, the anchoring group is suitably a polyamine, such as a polyalkylene imine or poly allylamines, wherein the alkylene is chosen from ethylene, propylene, isopropylene, butylene, isobutylene and any other butylene isomer. The anchoring group may further be a copolymer. The molecular weight of the anchoring group is suitably in the range of 100 to 10,000 g/mol, and more preferably in the range of 150 to 5000 g/mol. The polyalkyleneamine may further be provided with carbonyl groups adjacent to a nitrogen atom (for instance a (C=O)CH3 group). Any further variation is not excluded.

The invention also relates to the use of the surface active agents of the invention for reducing a stabilizing effect of a mixture of different phases. It is an advantage of the invention, that such destabilization occurs fast, that is within minutes and preferably within seconds, or even within a fraction of a second. It is a further advantage that the surface active agents may contain a plurality of stimulus responsive parts, so that with a single irradiative treatment a plurality of bonds may be broken and the stabilizing effect be reduced significantly. In this sense, the stabilizing effect may be said to collapse substantially entirely. Evidently, the agents could be designed with certain stabilizing groups that are not sensitive to the relevant radiation, so that the stabilizing effect is merely reduced to a predefined level.

The invention further relates to any composition comprising the surface active agents of the invention. Those are typically emulsions, dispersions and foams comprising a first phase to be stabilized in the second phase or medium.

The embodiments, preferred embodiments, advantages and definitions described in relation to one preceding aspect of this invention apply mutatis mutandis to another aspect of the invention.

### Definitions and implementation options

The term "anchoring part" is understood, in the context of the invention, to refer to the part of the surface active agent that interacts with the surface of a phase (for instance the surface of a solid particle or of a liquid particle), that needs to be stabilized in another phase. The anchoring part is chemically compatible with the chemical properties of the phase to be stabilized. This is to say that the Van der Waals forces, the polar/dipolar force, and/or the hydrogen bonding force between the anchoring part and the stabilizing part are strong. If the surface tension of a strongly non-polar particle is to be reduced in a polar environment, the Van der Waals force typically places a very large role.

The term 'stabilizing part' is understood, in the context of this invention, to refer to that part of the surface active agent that interacts with the phase wherein the other part is to be stabilized.
The term "stimulus responsive part" is understood, in the context of this invention, to refer to that part of the surface active agent that is responsive to a stimulus, as a consequence of which the stabilizing effect of the surface active agent reduces or disappears.

In an embodiment, the phases are solid, liquid and/or gaseous. The surface active agent for instance stabilizes a solid phase in a liquid phase, a liquid phase in another liquid phase, a gaseous phase in a liquid phase, or a solid phase in a gaseous phase. Further combinations are also possible. The stabilization of more than two phases is also part of the present invention. The phases that are compatible by means of the surface active agent typically have a different polarity or nature.

In again a different embodiment, the stimulus responsive surface active agent is a dispersing agent, wherein the different phase are a solid phase and a liquid phase. Prior to stimulation, the surface active agent brings about a colloidal solution between the solid phase and the liquid phase, and upon stimulation, the stabilizing effect of the surface active agent reduces and therewith the stabilization between the two phases. Hence, the colloidal solution collapses and the two different phases are distinguishable, of wherein the solid phase starts to flocculate.

In again another embodiment, the stimulus responsive surface active agent is an emulsifier, wherein the different phases are liquid. A non-polar droplet is for instance emulsified in a polar solution, wherein upon stimulation the emulsion collapses and a polar and a non-polar phase are formed, which are not mixed or are mixed less homogeneously. The skilled person will understand that the invention may further relate to other phases stabilized by means of a surface active agent, wherein after stimulation the phases are no longer stabilized or are less stabilized.

In again a further embodiment, the stimulus responsive surface active agent is a foaming agent, a detergent or a wetting agent.

In again a further embodiment, the anchoring part interacts with an inorganic phase such as a metal oxide, a metal sulphide, a metal selenide, a semiconductor and/or the anchoring part is selected from the group consisting of: carbonate, carboxylate, phosphate, phosphonate, sulphonate, polyamine, polyamide, polyurethane, polyoxyalkylene, mercapto derivative, aromate, polyaromate, hetero(poly)aromate, heterocycles (for instance with a S- and/or an N-heteroatom), derivatives and mixtures hereof.

In again a further embodiment, the anchoring part interacts with an organic medium such as a pigment, emulsion droplet, resin. The anchoring part is herein preferably polymeric and for instance selected from the group consisting of: polyamide such as carboxylated polyethylene imine, polyurethane, polyester, polyketon, poly(acrylo)nitril, polyacrylate (such as alkyl methacrylate, p-butyl acrylate, p-ethylhexyl acrylate, benzyl acrylate), polyvinylether, polyarylvinyl and copolymer of vinylether and arylvinyl, derivatives, copolymers and mixtures thereof The polymeric anchoring part herein is deemed to cover any oligomers. Preferably, the anchoring part is chosen so that it contains a plurality of anchoring sites for anchoring into or adhesion to the said organic medium. It is deemed suitable that the number of anchoring sites is at least 3. If the medium is in the form of a particle, the number of anchoring sites is suitable larger than 3, and may be larger than 6 or even larger. The exact design of such anchoring part will depend on the mixture and may be elaborated by a skilled person in the field of surfactants and surface active agents in general, or for certain specific application by a person with expert knowledge.

In again a further embodiment, the stabilizing part has a stabilizing effect on a phase in a non-polar medium. The stabilizing part is herein preferably polymeric and selected from the group consisting of: polysiloxane, polyhydroxystearic acid, polyricinoleic acid, polyacrylate, polystyrene, polyarylether and polyalkylenes such as polyethylene, polypropylene and polyisobutylene, derivatives and mixtures hereof, as well as any copolymers thereof. The polymeric stabilizing part is herein deemed to cover any oligomers, including oligomers with a chain length of 2-4 monomers, but also longer oligomers. Alternatively, use may be made of monomeric stabilizing parts. However, it is deemed preferable to use polymeric (including oligomeric) stabilizing parts, since splitting off such polymer part has typically a bigger impact on the stability than splitting off a (structurally similar) monomer stabilizing part.
In one suitable implementation hereof, the anchoring part herein suitably comprises a plurality of amino-groups, and is for instance a polyalkylene amine or imine. More preferably, the anchoring part comprises itself a plurality of anchoring sites. The resulting network molecule is deemed to be an optimum structure for dispersing a particle, more particularly particles with a diameter of 100 nanometers or more.

In again a further embodiment, the stabilizing part has a stabilizing effect on a phase in an aqueous medium. The stabilizing part is herein preferably selected from the group consisting of: ionic groups such as carboxylate, sulphonate, sulphate, phosphate, quaternary ammonium groups, derivatives and mixtures hereof.

In again a further embodiment, the stabilizing part has a stabilizing effect on a phase in a polar medium. The stabilizing part is herein preferably selected from the group consisting of: polyethylene glycol, polypropylene glycol, hydrophilic polyesters, hydrophilic polyacrylates, polyvinyl alcohol, polyvinylpyrrolidone, polysaccharide and derivatives and mixtures hereof.

In again a further embodiment, the stabilizing part has a stabilizing effect on a phase in a semi-polar medium. The stabilizing part is herein preferably selected from the group consisting of: polyester, such as polycaprolactone ester, polyvalerolactone ester, polyvinyl butyral, polyvinyl acetate, polyacrylate (such as alkyl(meth)acrylate) and derivatives and mixtures hereof. As discussed before, the examples given herein are polymeric, which includes oligomers. Such longer molecules are deemed suitable to achieve a significant change in stabilizing effect in the UV-irradiation, but that is not strictly necessary.

The term "derivative" is understood, in the context of the present invention, to refer to the basic skeleton of the compound as shown in the structural formula and/or the chemical name, and comprising or not comprising a compound with other groups, including but not limited to a compound with an anchoring part or a stabilizing part. A derivative further comprises a radical form of the basic skeleton as indicated.

For sake of clarity, it is observed that the term UV-irradiation is herein used to refer to irradiation in the UV-range or approximately in the field between UV and visible radation. It is deemed to include irradiation on the basis of various type of irradiation sources, including LED-type of irradiation sources, from which the wavelength may be tuned rather precisely. For instance, UV-irradiation at a wavelength of around 400 nm, particularly with LED lamps, is deemed a suitable embodiment.

According to this invention, the term "reduction of stabilization" is understood to mean that two phases that are more or less homogeneously mixed by means of a surface active agent, loose their stability after exposure to a stimulus.

Furthermore, in relation to the structural formulas specified hereinabove, the groups R₁-R₄ and generally any Rᵢ i≥1, is a substituent group or hydrogen atom. t at least one of them constitutes either the anchoring part of the stabilizing part. The group X is also a substituent group of any kind of nature. Where one of R₁-R₄ in one formula is implemented as the anchoring part, X will constitute the stabilizing part or vice versa.

The substituent group is typically any kind of carbon-based group, chain, and may be or may include any ring-type structures, such as phenylic, heterocyclic and cyclo-alkylic rings. The linkage of the substituent to the decomposable part explicitly shown in the structural formula typically depends on the atom or group to which said substituent is bound, i.e. where f.i. R₁ is coupled to a heteroatom, it is suitably an alkylic, or arylic group (which may again be substituted). Where f.i. R₁ is coupled to an aromatic ring, the linkage may comprise a heteroatom, but could alternatively be alkylic, as known to the skilled person in the field of organic chemistry.

For benzoin deratives as shown in formula (I), it is deemed suitable that at least one of the substituent R₁-R₄ and preferably R₁ and R₂ to the phenyl-rings are alkoxy-substituents, such as methoxy, ethoxy, propoxy and the like.
For the acetophenons of general formula (XXa), it is understood that at least one of R₁-R₃ comprises a heteroatom as a linkage (in the position bound to the carbon atom in the α-position). It is observed for clarity that the derivatives according to the formula (XI) are suitable examples of alkylaminoacetophenon derivatives, It is not excluded, in relation to this formula (XI), that the substituent R₂ to the nitrogen atom forms a ring with either substituent R₃ or R₄, and more preferably with R₃.
Furthermore, in the context of formula (XVI), the groups R₁ and R₂ may jointly with the ketal, constitute a ring-shaped structure.

### Examples

The invention is explained on the basis of following examples comprising embodiments of the invention, but do not limit the invention.
All chemical products were purchased from Sigma-Aldrich unless specified otherwise.

### Example 1: the decomposable part is located between the anchoring art and the stabilizing part

The synthesis of the stabilizing polyhydroxystearic acid chains (PHSA) is based on US4,224,212. These chains have optimal stabilizing effect in nonpolar media such as mineral oils and vegetable oils.

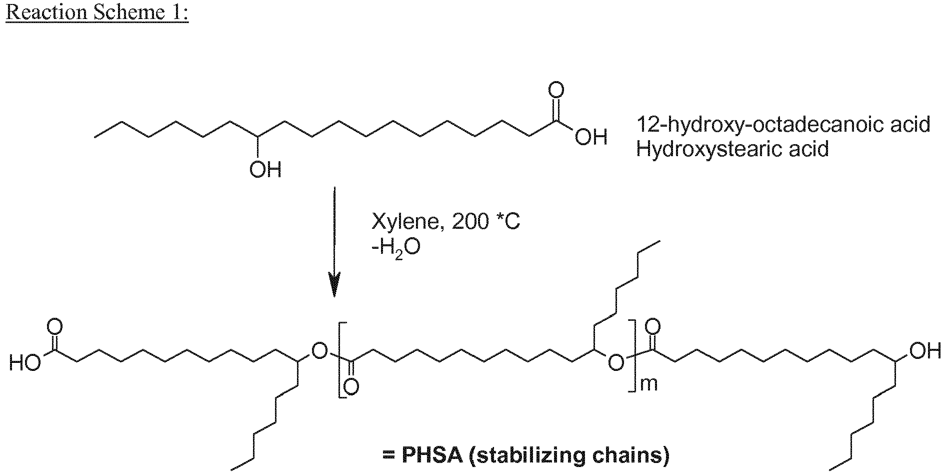

### 1.1. Synthesis of Polyhydroxystearic acid

In a 250 ml flask equipped with a Dean-Stark apparatus and a reflux condenser, there are added 100 g of 12-hydroxy-octadecanoic acid (12-hydroxystearic acid) and 50 ml of mixed xylene. The reaction mixture is heated under nitrogen in an oil bath at 195 - 200 ° C, and refluxed for 36 h. The progress of the reaction can be monitored by the amount of separated water. The degree of condensation was determined by means of IR and titration. In the IR spectroscopy is the carbonyl stretch ratio of the carboxylic acid and the ester a measure of the degree of condensation. By means of titration, the acid value can be determined. In this example, it amounted to 35 mg KOH / g, which is a value of n = 4 yields, or 6 HSA units.

In the following synthetic sequence, the photolabile group is synthesized and also the coupling of the anchoring and the stabilizing part.

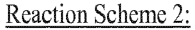

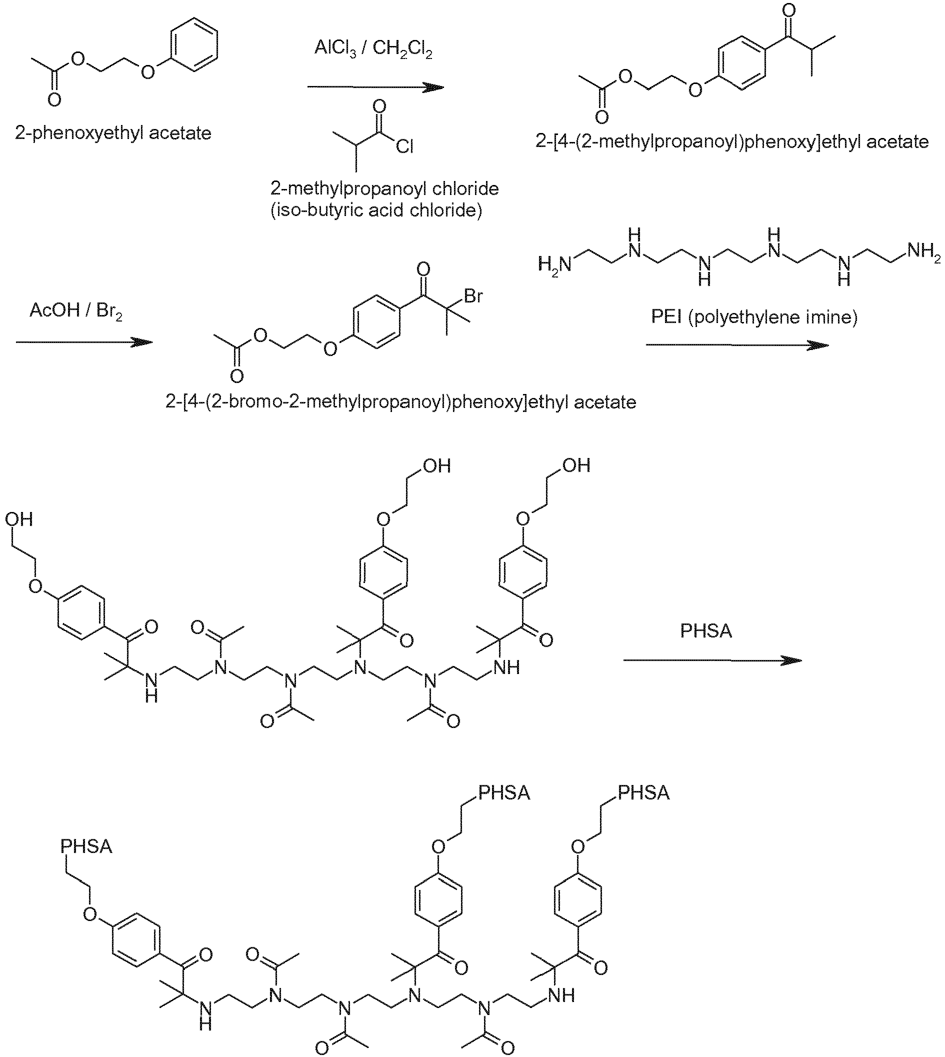

### 1.2. Synthesis of 2-[4-(2-methylpropanoyl)phenoxy]ethyl acetate

To a stirred solution of 29.4 g anhydrous aluminum trichloride at -5 to - 0 ° C in 20 ml of dichloromethane, 11.2 g of butaric acid is added dropwise during 30 min. After this, 18.0 g of 2-phenoxyethyl acetate is added dropwise at the same temperature for 1 h. The reaction mixture is stirred for 2 h at this temperature and then poured into a mixture of 60 ml concentrated HCl-solution and 80 ml of water. The organic phase is separated and the aqueous phase is extracted with 60 ml of dichloromethane. The organic phases are combined and washed with water, dried and evaporated in vacuo. 24.7 g (98.7%) of 2-[4-(2-methylpropanoyl)phenoxy]ethyl acetate was obtained.

### 1.3. Synthesis of 2-[4-(2-bromo-2-methylpropanoyl) phenoxy]ethyl acetate

25 g of 2-[4-(2-methylpropanoyl)phenoxy] ethyl acetate from example 1.2 is dissolved in 20 ml of glacial acetic acid. To this, 19.2 g of bromine is added dropwise with stirring at room temperature over 2 h. After 10 h stirring, the reaction mixture was poured into 300 ml of glacial acetic acid and extracted with 3 x 150 ml of ethyl acetate. The combined extracts are dried with magnesium sulfate, filtered and evaporated to a viscous oil.
In the next step, the photo-labile component is coupled with a polyethylenimine (PEI). This can be a linear or a branched PEI (such as the Lupasol ® polyethylenimines from BASF or the EPOMIN ® products of Nippon Shokubai). In the synthesis described below, is worked with the linear pentaethylenehexamine (PEI-6).

### 1.4. Synthesis of 2-[4-(2-bromo-2-methylpropanoyl)phenoxy] ethyl acetate adduct to PEI-6

25 g of 2-[4-(2-bromo-2-methylpropanoyl)phenoxy]ethyl acetate from 1.3 is dissolved in 100 ml of ethanol. With stirring, 7.7 g of pentaethylenehexamine and then 15 g of N, N-diisopropylethylamine were added. After 2 h stirring, if necessary, the remaining free amino groups are acetylated with acetic anhydride and then 38 g of a 32% sodium hydroxide solution was added at room temperature. Ethanol is evaporated off and 300 ml of water is added. This mixture is extracted with 3 x 50 ml each of ethyl acetate. The organic phase is dried with sodium sulphate, filtered and evaporated.

### 1.5. Coupling of the product of 2. 4 and the PHSA from Example 2.1.

12.5 g of CDI (carbonyldiimidazole) is mixed in 25 ml of ethyl acetate with 125 g PHSA from Example 1.1. After 30 min of stirring, 25 g of the product from example 1.4, dissolved in 25 ml of ethyl acetate, are added. This mixture is stirred for 6 to 60 ° C. After evaporation in vacuo an oil is obtained, and mixed with 50 ml of water and then extracted with 3 x 50 ml of butyl acetate. After evaporation of the organic phase an oil is obtained which as such can be used as a dispersing agent.

### Application example 1

### UV-radiation decomposing dispersing agent for liquid toner

Toner particles, consisting of a polyester resin (type Setafix™ P180 or Almacryl™ P501) extruded with a pigment (for instance CI Pigment Blue 15:4) and optionally a softening agent (for instance Ketjenflex™ 9S) may be dispersed in a mineral oil (type Lytol oil or Carnation oil) into a basis for liquid toner applications. It is desirable that the toner particles have a diameter of approximately 2 micrometer, that these particles are stable in the toner liquid and rapidly form a film at development temperatures (>100°C) with a good adhesion to the printed substrate. A typical dispersing agent used for such an oil based application is Solsperse™ 11000 (Lubrizol Corporation). The toner may be milled with this dispersing agent to the desired particle size in a conventional perl mill, but the inherently required stability of the dispersion is too good to obtain an adequate film formation during development. It was found that the dispersing agent described in 2.5 is capable of solving this dilemma. It turns out that this dispersing agent is perfectly capable to result in a toner dispersion meeting all requirements (small average particle size, stable dispersions under typical conditions). This dispersing agent moreover can give under irradiation with UV (Hg-lamp, 254 nm) to complete instability of the toner dispersion resulting in optimum film formation and adhesion.

### Example 2: central decomposable photolabile group to which the anchoring part and the stabilizing part are bound

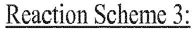

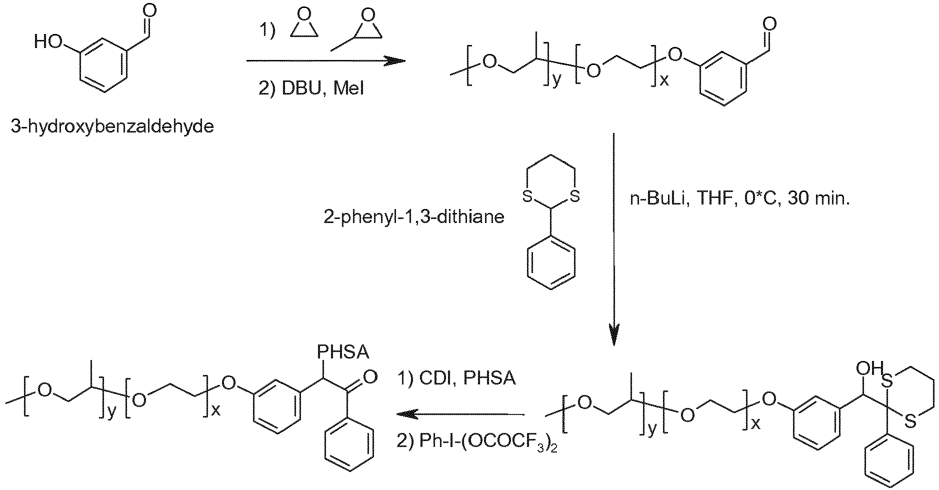

### 2.1. MeO-PPG-PEG-O-benzaldehyde

To a solution of 12.2 g of 3-hydroxybenzaldehyde and 0.2 g of methanesulfonic acid in 25 ml of tetrahydrofuran (THF) at -20 ° C, a cooled mixture (-20 ° C) of 22.1 g of ethylene oxide and 29.1 g of propylene oxide in 167 ml of THF was added for 90 min. The reaction mixture is stirred for 1 h and brought to room temperature. Then, 16.7 g of DBU was added, and to this 15 g of methyl iodide was added dropwise. After stirring for 1 hour, 100 ml of water was added at room temperature, and the mixture is extracted with 3 x 100 ml dichloromethane. The combined organic phase is dried, filtered and evaporated under vacuum.

### 2.2. 2-phenyl-1,3-dithiane adduct to PPG-MeO-PEG-O-benzaldehyde of 2.1.

A solution of 10.5 g of 2-phenyl-1,3-dithiane in 50 ml of THF is cooled to 0 ° C and to this 3.3 g of butyl lithium was added. After 30 min of stirring, 32.3 g of MeO-PEG-PPG-O-benzaldehyde from example 2.1 was dissolved in 50 mL of THF and added. After 1 h stirring at room temperature, the reaction mixture was quenched by adding 200 ml of ammonium chloride solution. THF was largely removed by vacuum distillation and the remaining phase was extracted with 3 x 100 ml of dichloromethane. The combined organic phase is dried, filtered and evaporated under vacuum.

### 2.3. Coupling of the adduct from 3.2 to polyhydroxystearic acid and deprotection of the dithiane protective carbonyl group

The procedure for coupling with the polyhydroxystearic acid is analogous as in example 1.5.

The obtained oil is dissolved in 100 ml of acetonitrile and to this 2 equivalents of [bis (trifluoroacetoxy) iodo] benzene were added. After 20 min of stirring, 50 ml of water was added at room temperature, and after an additional 1 h of stirring, the acetonitrile is evaporated. Then 100 ml of water was added and the remaining phase is extracted with 3 x 100 ml of dichloromethane. The combined organic phases are dried, filtered and evaporated under vacuum. The thus obtained dispersing agent can be used as such.

### Application example 2

### UV-decomposable dispersing agent for liquid toner

Analogous to application example 1 the UV-sensitive dispersing agent from 2.3 was found to be highly suitable for stabilisation of a liquid toner dispersion. The ink was destabilised by means of a UV-source, after application, resulting in fast film formation.

### Example 3: the anchoring part is the collapsible group and the stabilising part is coupled thereto

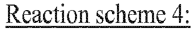

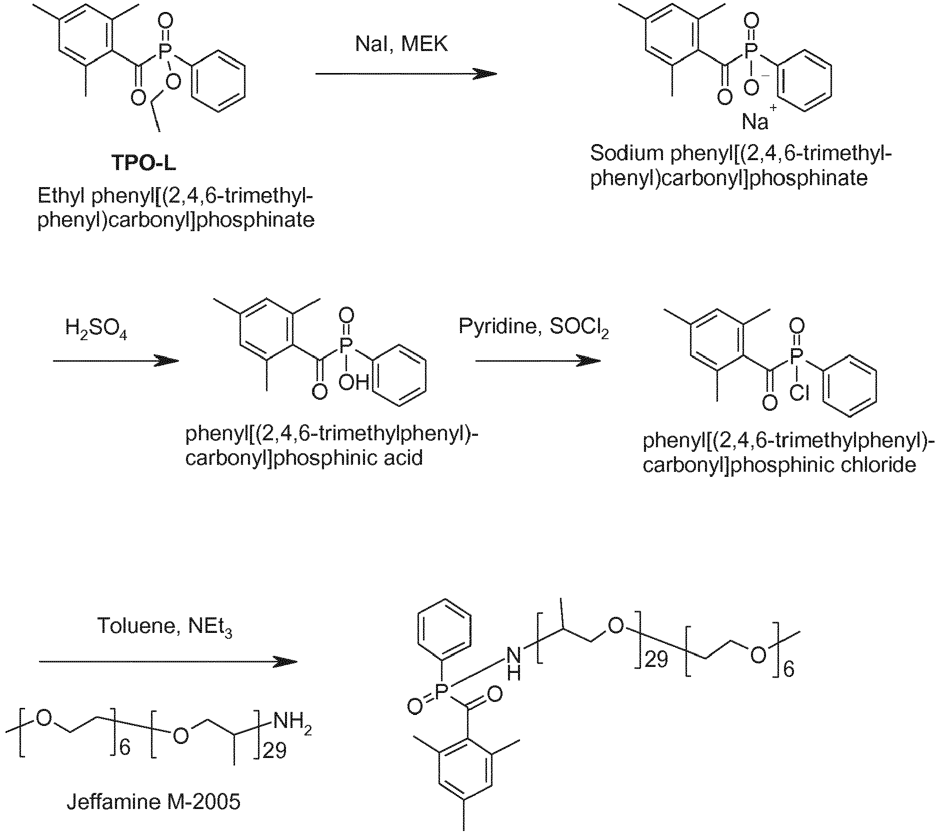

### 3.1. Sodium phenyl[2,4,6-trimethylphenyl)carbonyl]phosphinate

32.2 g ethyl phenyl[(2,4,6-trimethylphenyl)carbonyl] phosphinate (Lucirin™ TPO-L, BASF AG) is dissolved in 150 ml methylethylketone. 15.7g sodium iodide is added to the solution. After stirring during 15 minutes, the solution is heated to 65°C and stirred for another 24 hours. The yellow precipitate is filtrated and washed with 2x 25 ml petroleum ether. The precipitate is dried under vacuo at 60°C. 26.5 g (85%) brightly yellow powder is isolated.

### 3.2. Phenyl[2,4,6-trimethylphenyl)carbonyl]phosphinic acid

20.8g sodium salt from 3.1 is dissolved in 75 ml water and thereafter brought to pH1 with 65 ml 0.5M sulphuric acid. After 1 hour, the precipitate is filtrated and washed with 2X 35ml water. The precipitate is dried azeotropically with 75ml toluene. The clear brightly yellow toluene solution is distilled under vacuo and the acid is recrystallized with 110 ml ethyl acetate. The precipitate is filtered at 0°C and dried in vacuum at 60°C. 15g (80%) of brightly yellow powder is isolated.

### 3.3. phenyl[2,4,6-trimethylphenyl)carbonyl]phosphinic acid chloride

12.5g of the acid from 3.2 is suspended in 34 ml toluene and dissolved with 5.1g pyridine. 7.7g thionylchloride is added dropletwise to the reaction mixture at 60°C during 1 hour. After 3 hours, the redbrown emulsion is cooled to 0°C and the rust-brown crystals are filtrated. The remaining solution is distilled under vacuo. Yield: 13g (90%).

### 3.4. Conversion of the chloride from 4.3 with Jeffamine M-2005

A solution of 50 ml toluene, 3.7g triethylamine and 9.5g of the chloride from 4.3 is heated to 50°C under nitrogen atmosphere. After 30 minutes, 61.3 g Jeffamine™ M-2005 (Huntsman) is added in metered portions. The reaction mixture is cooled after 2 hours at 50°C and mixed with 10ml saturated NaCl solution. The organic phase is 3x extracted with 10 ml of a saturated NaCl-solution. The organic phase is dried with sodium sulphate and evaporated under vacuo.

### Application example 3

The dispersing agent from 3.4 turned out very capable of finely dispersing active carbon particles in water. Thereto 20% active carbon was dispersed in water together with 2% dispersing agent by means of a high shear mixer (type rotor-stator). Active carbon may interact with other particles. The charged active carbon may be filtered smoothly after irradiating the mixture with a 365 nm UV-source, after which the active carbon flocculates together with the charged particles.

### Example 4: the anchoring part is coupled to the stabilizing part that collapses into groups

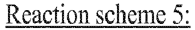

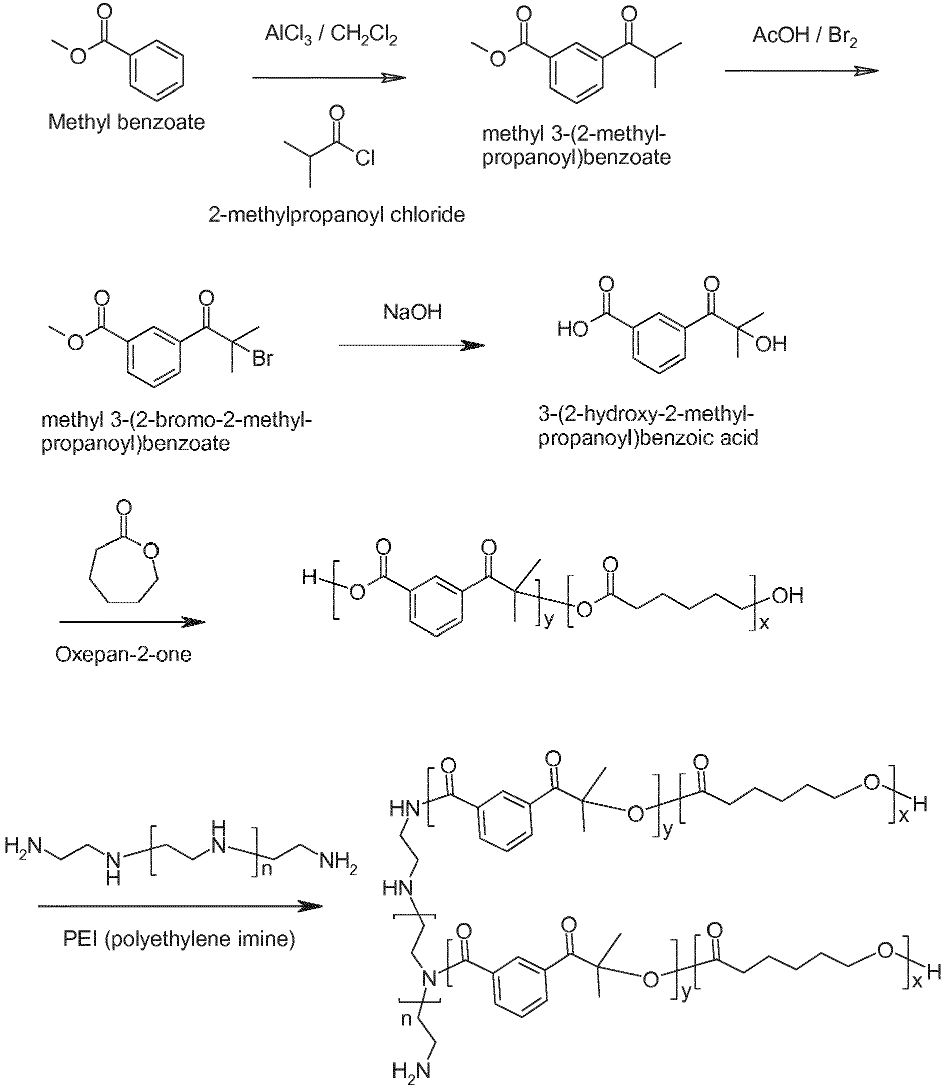

The synthesis of the methyl 3-(2-methylpropanoyl)benzoate and the methyl 3-(2-bromo-2-methylpropanoyl) benzoate occur analogously to the synthesis described in 1.2 and 1.3.

### 4.1. 3-(2-hydroxy-2-methylpropanoyl)benzoic acid

28.5g methyl 3-(2-bromo-2-methylpropanoyl)benzoate is dissolved in 100 ml ethanol. 58g 32% sodium hydroxide solution is added under stirring during 20 minutes at room temperature. Stirring of the reaction mixture is continued for another 10 minutes, after which the ethanol is evaporated under vacuo. The remaining oil is mixed with 200 ml ice water and neutralized (to pH5-7) with a diluted hydrochloric acid solution. This mixture is 3x extracted with each time 100 ml ethyl acetate. The combined organic fractions are dried, filtrated and evaporated under vacuo.

### 4.2. Polyester of 3-(2-hydroxy-2-methylpropanoyl)benzoic acid with ε-caprolactam

5g 3-(2-hydroxy-2-methylpropanoyl)benzoic acid from 4.1 and 10g ε-caprolactam are stirred under nitrogen atmosphere during 6 hours at 180°C in the presence of 0.2g zirconium butoxide. This mixture is used as such after cooling. The molecular weight may fluctuate and may be determined by means of titration.

### 4.3. Condensation of the polyester from 4.2 with polyethyleneimine

5g polyethylene imine (Mw 800) and 8 equivalents polyester from 4.2 are stirred under nitrogen atmosphere during 6 hours at 150°C. The dispersing agent may used as such after cooling.

### Application example 4

### Patterned ink removal by means of UV irradiation

A magenta solvent ink obtained by dispersing pigment violet 19, Ink Jet Magenta E5B 02 supplied by Clariant, with the dispersing agent from 4.3 in a 1:1 ratio in diethylene glycol diethyl ether with a pearl mill. The final concentration of PV19 in the ink was 5%. A uniform coating of this ink on a PVC substrate was irradiated through a UV-mask with a mercury lamp. The pigment could be easily removed on the irradiated areas, while the pigment adhered well to the PVC-substrate on the non-irradiated areas.

### Example 5: The anchoring part is connected with the stabilizing part comprising decomposable groups

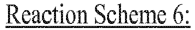

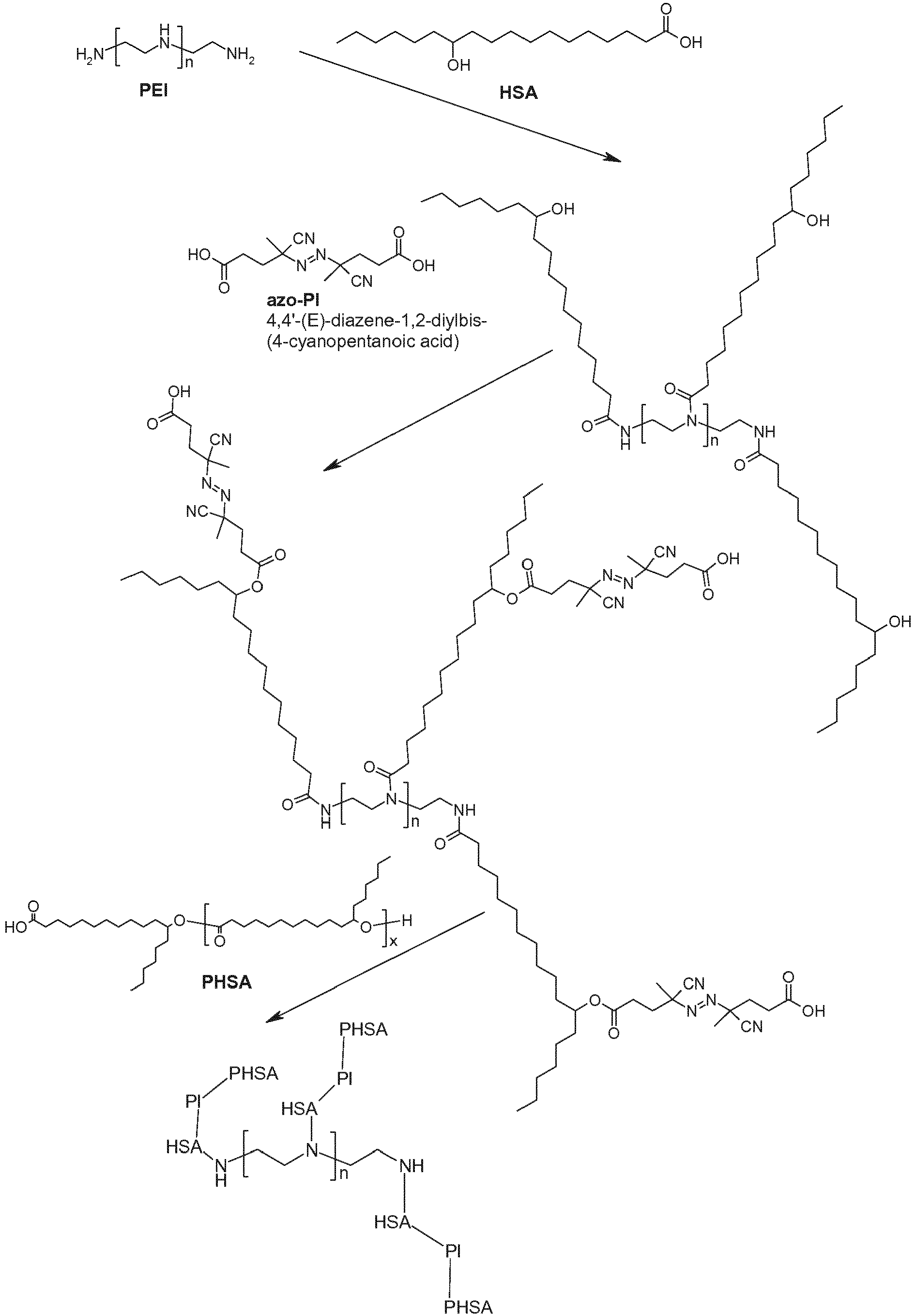

### 5.1. Coupling of polyethylenimine with 12-hydroxysteraric acid

23.2 g of pentaethylenehexamine is mixed together with 90.1 g of 12-hydroxystearic acid under a nitrogen flow for 6 h and heated at 150 ° C. After cooling, a waxy solid is obtained.

### 5.2. Coupling HSA-PEIpolymer with a photoinitiator and a polyhydroxystearic acid

9.4 g PEI-HSA from 5.1 is coupled by means of CDI with 8.4 g of photoinitiator 4,4'-(E)-diazene-1 ,2-diylbis (4-cyanopentanoic acid), and then with 48,9 g polyhydroxystearic acid (Mw 1630, example 1.1) using the procedure described in example 1.5, with the difference that toluene was used in place of ethyl acetate yielding dispersing agent.

### Application example 5

### UV-decomposable dispersing agent for liquid toner

Analogous to application example 1 and application example 2, the UV-sensitive dispersing agent from 5.2 turned out highly suitable for stabilisation of a liquid toner dispersion. After application, the ink was destabilised by means of a UV-source, resulting is fast film formation.

### Example 6: The anchoring part is connected with the stabilizing part that comprises the decomposable group

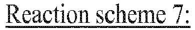

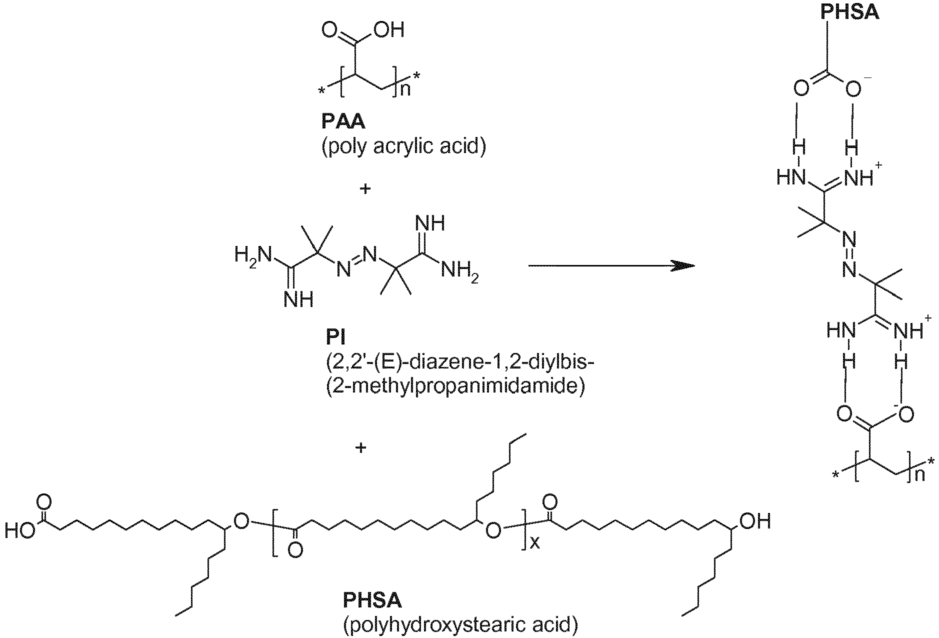

### 6.1. Coupling of polyacrylic acid with a photoinitiator and polyhydroxystearic acid

The molecular weight (Mw) of the polyacrylic acid and the poly-hydroxystearic acid is first determined by means of titration, so that the stoichiometry of the reaction is ensured.
1.8 g of polyacrylic acid (Mw 1800), 5.0 g photoinitiator. 2,2'-(E)-diazene-1,2-diylbis (2-methylpropanimidamide) and 40.8 g polyhydroxystearic acid (Mw 1630 Example 1.1) are dissolved in 100 ml toluene at room temperature and stirred for 1 h. Subsequently, the toluene is evaporated under vacuum resulting in a dispersing agent.

### Application example 6

### UV-decomposable dispersing agent for liquid toner

In a manner analogous to application example 1, application example 2 and application example 5, the UV-sensitive dispersing agent from 6.1 turned out highly suitable for stabilisation of a liquid toner dispersion. After application, the ink was destabilized by means of a UV-source, allowing a fast film formation.

### Example 7

The synthesis of a further stimulus responsive dispersing agent is shown in Reaction Scheme 8. This scheme results in (4-decyl-benzoyl)-phenyl-phosphinic acid sodium salt. The alkyl-chain herein represents the anchoring part. The phosphinic acid sodium salt constitutes the hydrophilic stabilization part. The stimulus responsive part comprises the benzoyl-group, such that after exposure to irradiation (365 nm) the phenyl-phosphinic acid sodium salt is split off in seconds and a hydrophobic chain is left over.

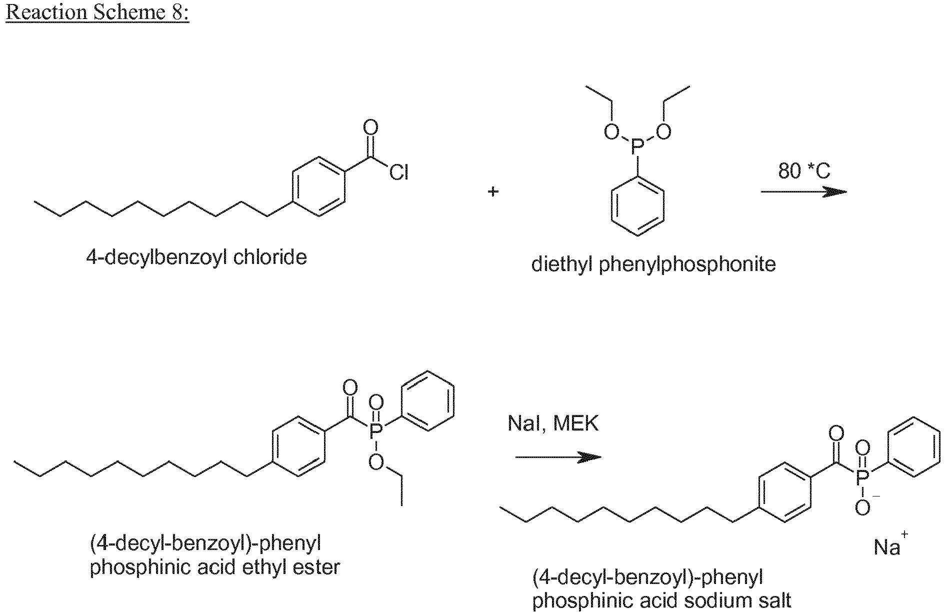

### Synthesis of (4-Decyl-benzoyl)-phenyl-phosphinic acid ethyl ester

14.0 g 4-decylbenzoylchloride and 9.9 g diethyl phenylphosphonite are heated at 80 °C under inert atmosphere for 6 hours. The resulting oil is used as such in the following reaction.

### Synthesis of (4-Decyl-benzoyl)-phenyl-phosphinic acid sodium salt

20.7 g (4-Decyl-benzoyl)-phenyl-phosphinic acid ethyl ester is dissolved in 100 ml methyl ethyl ketone. 7.8 g sodium iodide is added to the solution. After 15 minutes stirring, the solution is heated to 65 °C for 24 hours. The precipitate is filtered, washed with 2 x 20 ml petroleum ether and dried under vacuum. The yellow powder, thus obtained, was used as a dispersing surface active agent according to the above described description.

## Claims

1. Surface active agent comprising an anchoring part, a stabilizing part and a stimulus responsive part, wherein the stimulus responsive part comprises photodecomposable group with a covalent bond, which covalent bond is such that it is broken upon stimulation of the surface active agent by exposure to UV radiation and which stimulus responsive part is arranged such that the anchoring part and the stabilizing part are no longer connected after breaking said covalent bond, wherein the photodecomposable group is a combination of a benzoyl group and a polar group on an α-position to the carbonyl of the benzoyl-group, and chosen from 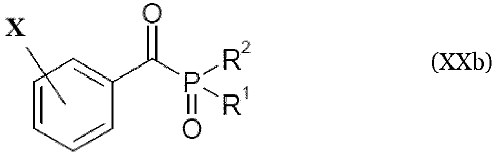 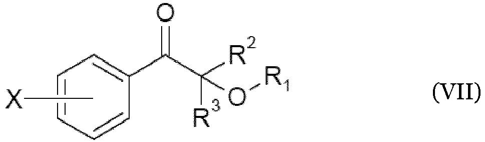 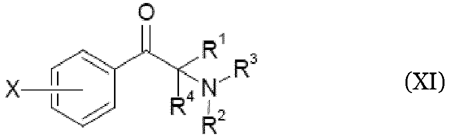 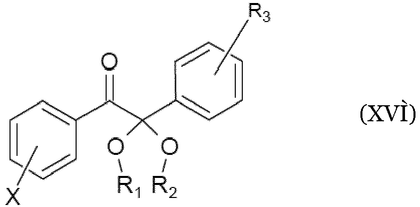 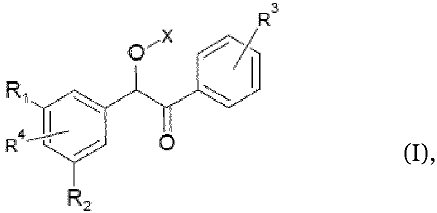 and 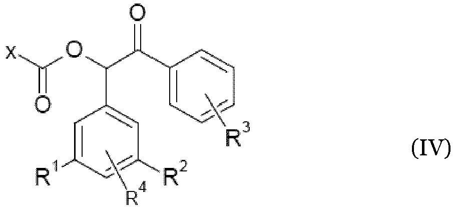 Wherein R¹-R⁷ is a substituent group or hydrogen and wherein X is a substituent group, said substituent group X being either the anchoring part or the stabilizing part and at least one of R¹-R⁴ constitutes the other one of anchoring part and stabilizing part.

2. Surface active agent according to claim 1, wherein the benzoyl and the polar group jointly constitute an acetophenon-group, which acetyl-group is substituted with amino, hydroxyl, alkoxy, ester (RCOO-), dialkoxy.

3. Surface active agent according to claim 1, wherein the polar group comprises a phosphinyl-group (P=O).

4. Surface active agent according to any of the claims 1-3, wherein a further phenyl ring is present on the β- or on the γ-position.

5. Surface active agent according to any of the claims 1 to 4, comprising 2, 3, 4, 5, 6 or more stimulus responsive parts.

6. Surface active agent according to any of the claims 1-5, wherein the surface active agent is designed so that a plurality of substituent groups is coupled to an anchoring part, at least some of which substituent groups comprising a stimulus responsive part and a stabilizing part.

7. Surface active agent according to any of the claims 1 to 6, being a dispersing agent.

8. Surface active agent according to any of the claims 1-7, wherein the photodecomposable group selected from the group consisting of:
• 2-phenyl-2-hydroxy-1-phenylethanone moiety;
• 2-oxo-1,2-diphenylethyl formate moiety;
• hydroxyacetophenone derivative;
• alkylaminoacetophenone derivative;
• benzyl ketal derivative comprising the compound with structural formula (XVI); 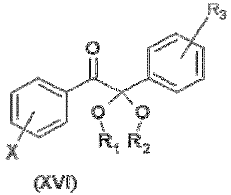
• a benzoylphosphinoxide derivative;
• a benzoylphosphinate derivative;
• a BAPO (bisacylphosphine oxide or bisbenzoylphosphine oxide).

9. Surface active agent according to any of the claims 1-8, wherein the anchoring group is a polyamine.

10. Surface active agent according to any of the claims 1-9, wherein the stabilizing part is polymeric and selected from the group consisting of polysiloxane, polyhydroxystearic acid, polyricinoleic acid, polyacrylate, polystyrene, polyarylether, polyalkylenes, derivatives and mixtures and copolymers thereof.

11. Surface active agent according to any of the claims 1-9, wherein the stabilizing part contains a ionic group, such as carboxylate, sulphonate, sulphate, phosphate, quaternary ammonium.

12. Surface active agent according to any of the claims 1-9, wherein the stabilizing part is selected from the group consisting of polyethylene glycol, polypropylene glycol, hydrophilic polyesters, hydrophilic polyacrylates, polyvinyl alcohol, polyvinylpyrrolidone, polysaccharide, derivates and mixtures thereof, or from the group consisting of polyester, such as polycaprolactone ester, polyvalerolactone ester, polyvinyl butyral, polyvinyl acetate, polyacrylate, and derivatives and mixtures thereof.

13. A process for the preparation of the surface active agent according to any of the claims 1-12, comprising the step of reacting a stimulus responsive part with an anchoring part and/or a stabilizing part.

14. Composition containing a first and a second phase and a surface active agent for stabilization of the first phase in the second phase, **characterized in that** the surface active agent as claimed in any of the claims 1-12 is present.

15. Use of the surface active agent as claimed in any of the claims 1-12 for reducing a stabilizing effect of a mixture of different phases.

## Patentansprüche

1. Oberflächen-aktiver Stoff, welcher einen Verankerungsteil, einen Stabilisierungsteil und einen Stimulus-responsiven Teil umfasst, wobei der Stimulus-responsive Teil eine Photo-zersetzbare Gruppe mit einer kovalenten Bindung umfasst, wobei die kovalente Bindung derart ist, dass sie auf eine Stimulation des Oberflächen-aktiven Stoffs hin durch Aussetzen an UV-Strahlung hin gespalten wird, und wobei das Stimulus-responsive Teil derartig angeordnet ist, dass der Verankerungsteil und der Stabilisierungsteil nach dem Spalten der kovalenten Bindung nicht länger verbunden sind, wobei die Photo-zersetzbare Gruppe eine Kombination ist aus einer Benzoylgruppe und einer polaren Gruppe auf einer α-Position zu dem Carbonyl der Benzoylgruppe, und ausgewählt ist aus 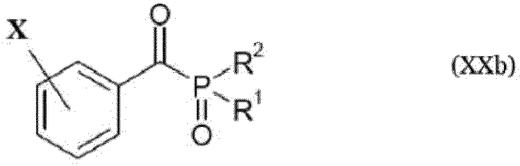 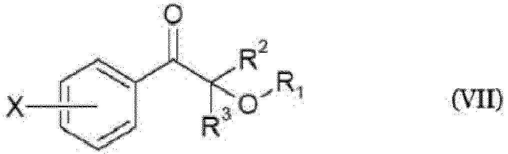 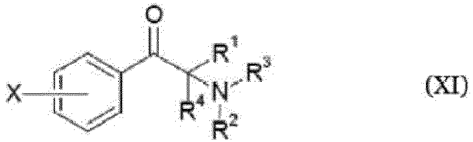 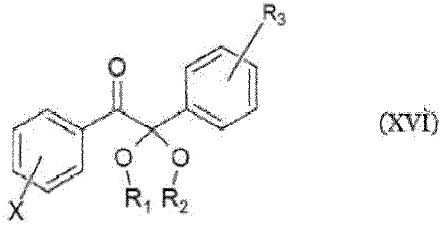 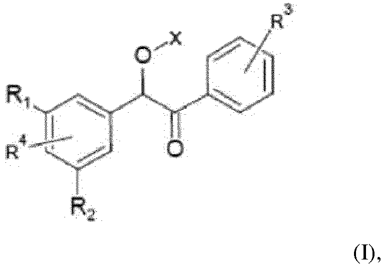 und 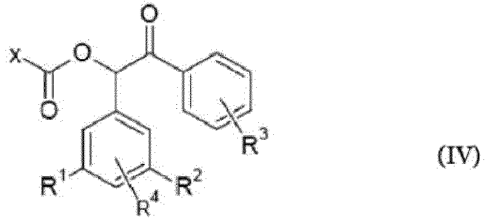 wobei R¹ - R⁷ eine Substituierungsgruppe oder Wasserstoff ist, und wobei X eine Substituierungsgruppe ist, welche entweder der Verankerungsteil oder der Stabilisierungsteil ist, und wobei zumindest eines von R¹ - R⁴ den anderen von dem Verankerungsteil und Stabilisierungsteil darstellt.

2. Oberflächen-aktiver Stoff gemäß Anspruch 1, wobei die Benzoylgruppe und die polare Gruppe gemeinsam eine Acetophenongruppe bilden, wobei die Acetylgruppe durch Amino-, Hydroxyl, Alkoxy, Ester (RCOO-), Dialkoxy substituiert wird.

3. Oberflächen-aktiver Stoff gemäß Anspruch 1, wobei die polare Gruppe eine Phosphinylgruppe (P = 0) umfasst.

4. Oberflächen-aktiver Stoff gemäß einem der Ansprüche 1 - 3, wobei ein weiterer Phenylring auf der β- oder auf der γ-Position vorhanden ist.

5. Oberflächen-aktiver Stoff gemäß einem der Ansprüche 1 - 4, welcher 2, 3, 4, 5, 6 oder mehr Stimulus-responsive Teile umfasst.

6. Oberflächen-aktiver Stoff gemäß einem der Ansprüche 1 - 5, wobei der Oberflächen-aktive Stoff derart ausgebildet ist, dass eine Vielzahl von Substituierungsgruppen an den Verankerungsteil gekoppelt sind, wobei zumindest einige der Substituierungsgruppen einen Stimulus-responsiven Teil und einen Stabilisierungsteil umfassen.

7. Oberflächen-aktiver Stoff gemäß einem der Ansprüche 1 - 6, welcher ein Dispersionsmittel ist.

8. Oberflächen-aktiver Stoff gemäß einem der Ansprüche 1 - 7, wobei die Photo-zersetzbare Gruppe ausgewählt ist aus der Gruppe bestehend aus:
• 2-Phenyl-2-Hydroxy-1-Phenylethanon Rest;
• 2-Oxo-1,2-Diphenylethyl-Format Rest;
• Hydroxyacetophenon-Derivat;
• Alkylaminoacetophenon-Derivat;
• Benzyl-Ketal-Derivat, welches die Verbindung mit der Strukturformel (XVI) umfasst: 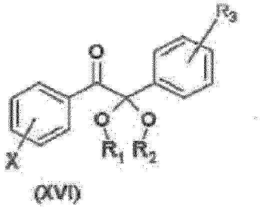
• ein Benzoylphosphinoxid-Derivat;
• ein Benzoylphosphinat-Derivat;
• ein BAPO (Bisacylphosphinoxid oder Bisbenzoylphosphinoxid).

9. Oberflächen-aktiver Stoff gemäß einem der Ansprüche 1 - 8, wobei die Verankerungsgruppe ein Polyamin ist.

10. Oberflächen-aktiver Stoff gemäß einem der Ansprüche 1 - 9, wobei der Stabilisierungsteil polymer ist und ausgewählt ist aus der Gruppe bestehend aus Polysiloxan, Polyhydroxystearinsäure, Polyricinoleinsäure, Polyacrylat, Polystyren, Polyarylether, Polyalkylenen, Derivaten und Mischungen und Copolymeren davon.

11. Oberflächen-aktiver Stoff gemäß einem der Ansprüche 1 - 9, wobei der Stabilisierungsteil eine ionische Gruppe enthält, wie beispielsweise Carboxylat, Sulphonat, Sulfat, Phosphat, quaternäres Ammonium.

12. Oberflächen-aktiver Stoff gemäß einem der Ansprüche 1 - 9, wobei der Stabilisierungsteil ausgewählt ist aus der Gruppe bestehend aus Polyethylen Glycol, Polypropylen Glycol, hydrophilen Polyestern, hydrophilen Polyacrylaten, Polyvinyl Alkohol, Polyvinylpyrrolidon, Polysacchariden, Derivaten und Mischungen davon, oder aus der Gruppe bestehend aus Polyester, wie beispielsweise Polycaprolaceton Ester, Polyvalerolaceton Ester, Polyvinylbutyral, Polyvinylacetat, Polyacrylat und Derivaten und Mischungen davon.

13. Verfahren zur Herstellung eines Oberflächen-aktiven Stoffs gemäß einem der Ansprüche 1 - 12, welches den Schritt des Reagierens eines Stimulus-responsiven Teils mit einem Verankerungsteil und/oder einem Stabilisierungsteil umfasst.

14. Zusammensetzung, welches eine erste und eine zweite Phase und einen Oberflächen-aktiven Stoff zur Stabilisierung der ersten Phase in der zweiten Phase enthält, **dadurch gekennzeichnet, dass** der Oberflächen-aktive Stoff, wie in einem der Ansprüche 1 - 12 beansprucht, vorhanden ist.

15. Verwendung des Oberflächen-aktiven Stoffs, wie in einem der Ansprüche 1 - 12 beansprucht, zum Reduzieren eines stabilisierenden Effekts einer Mischung verschiedener Phasen.

## Revendications

1. Agent tensioactif comprenant une partie d'ancrage, une partie de stabilisation et une partie sensible à un stimulus, dans lequel la partie sensible à un stimulus comprend un groupe photodécomposable ayant une liaison covalente, laquelle liaison covalente est telle qu'elle est cassée lors d'une stimulation de l'agent tensioactif par exposition à un rayonnement UV et laquelle partie sensible à un stimulus est agencée de telle sorte que la partie d'ancrage et la partie de stabilisation ne sont plus du tout reliées après la cassure de ladite liaison covalente, dans lequel le groupe photodécomposable est une combinaison d'un groupe benzoyle et d'un groupe polaire sur une position α par rapport au carbonyle du groupe benzoyle, et choisi parmi 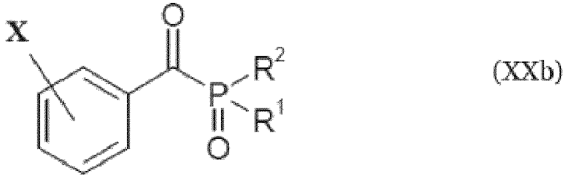 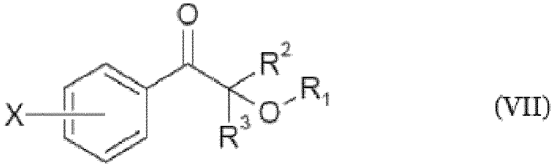 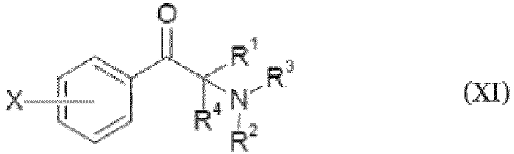 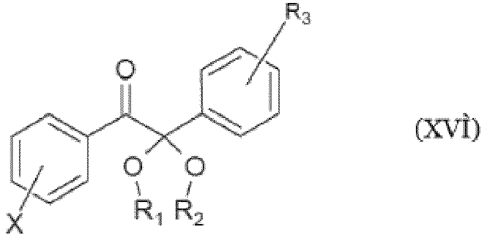 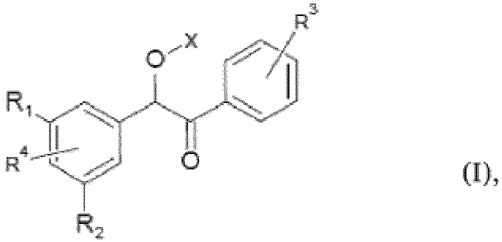 et 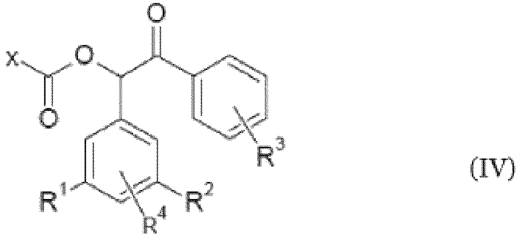 dans lequel R¹ à R⁷ est un groupe substituant ou un hydrogène et dans lequel X est un groupe substituant, ledit groupe substituant X étant soit la partie d'ancrage, soit la partie de stabilisation et au moins l'un parmi R¹ à R⁴ constitue l'autre parmi la partie d'ancrage et la partie de stabilisation.

2. Agent tensioactif selon la revendication 1, dans lequel le benzoyle et le groupe polaire constituent ensemble un groupe acétophénone, lequel groupe acétyle est substitué avec un amino, un hydroxyle, un alcoxy, un ester (RCOO-), un dialcoxy.

3. Agent tensioactif selon la revendication 1, dans lequel le groupe polaire comprend un groupe phosphinyle (P=O).

4. Agent tensioactif selon l'une quelconque des revendications 1 à 3, dans lequel un cycle phényle supplémentaire est présent sur la position β ou γ.

5. Agent tensioactif selon l'une quelconque des revendications 1 à 4, comprenant 2, 3, 4, 5, 6 parties ou plus sensibles à un stimulus.

6. Agent tensioactif selon l'une quelconque des revendications 1 à 5, dans lequel l'agent tensioactif est conçu pour qu'une pluralité de groupes substituants soient couplés à une partie d'ancrage, au moins une partie de ces groupes substituants comprenant une partie sensible à un stimulus et une partie de stabilisation.

7. Agent tensioactif selon l'une quelconque des revendications 1 à 6, qui est un agent de dispersion.

8. Agent tensioactif selon l'une quelconque des revendications 1 à 7, dans lequel le groupe photodécomposable est sélectionné dans le groupe constitué par :
- un fragment 2-phényl-2-hydroxy-1-phényléthanone ;
- un fragment formiate de 2-oxo-1,2-diphényléthyle ;
- un dérivé d'hydroxyacétophénone ;
- un dérivé d'alkylaminoacétophénone ;
- un dérivé de benzyl cétal comprenant le composé ayant la formule structurelle (XVI) ; 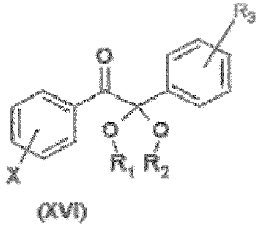
- un dérivé de benzoylphosphinoxyde ;
- un dérivé de benzoylphosphinate ;
- un BAPO (oxyde de bisacylphosphine ou oxyde de bisbenzoylphosphine).

9. Agent tensioactif selon l'une quelconque des revendications 1 à 8, dans lequel le groupe d'ancrage est une polyamine.

10. Agent tensioactif selon l'une quelconque des revendications 1 à 9, dans lequel la partie de stabilisation est polymérique et sélectionnée dans le groupe constitué par un polysiloxane, un polyacide hydroxystéarique, un polyacide ricinoléique, un polyacrylate, un polystyrène, un polyaryléther, les polyalkylènes, les dérivés et les mélanges et les copolymères de ceux-ci.

11. Agent tensioactif selon l'une quelconque des revendications 1 à 9, dans lequel la partie de stabilisation contient un groupe ionique, tel qu'un carboxylate, un sulfonate, un sulfate, un phosphate, un ammonium quaternaire.

12. Agent tensioactif selon l'une quelconque des revendications 1 à 9, dans lequel la partie de stabilisation est sélectionnée dans le groupe constitué par un polyéthylène glycol, un polypropylène glycol, les polyesters hydrophiles, les polyacrylates hydrophiles, un polyalcool vinylique, une polyvinyl-pyrrolidone, un polysaccharide, les dérivés et les mélanges de ceux-ci, ou dans le groupe constitué par un polyester, tel qu'un polyester de caprolactone, un polyester de valérolactone, un polyvinyl butyral, un polyacétate de vinyle, un polyacrylate, et les dérivés et les mélanges de ceux-ci.

13. Procédé pour la préparation de l'agent tensioactif selon l'une quelconque des revendications 1 à 12, comprenant l'étape de réaction d'une partie sensible à un stimulus avec une partie d'ancrage et/ou une partie de stabilisation.

14. Composition contenant une première et une seconde phase et un agent tensioactif pour la stabilisation de la première phase dans la seconde phase, **caractérisé en ce que** l'agent tensioactif selon l'une quelconque des revendications 1 à 12 est présent.

15. Utilisation de l'agent tensioactif selon l'une quelconque des revendications 1 à 12 pour réduire un effet de stabilisation d'un mélange de différentes phases.
